# EUROPÄISCHE PATENTSCHRIFT

(11) **EP 4 565 926 B1**
(45) Veröffentlichungstag und Bekanntmachung des Hinweises auf die Patenterteilung: **21.01.2026**
(21) Anmeldenummer: 23753875.6
(22) Anmeldetag: 04.08.2023
(51) Int. Cl.: G05B 19/404, G05B 5/01, G05B 13/04, G05B 17/02

(54) **VERFAHREN ZUM BETREIBEN EINES ANTRIEBSSYSTEMS, COMPUTERPROGRAMMPRODUKT, STEUEREINHEIT UND INDUSTRIE-APPLIKATION**
METHOD FOR OPERATING A DRIVE SYSTEM, COMPUTER PROGRAM PRODUCT, CONTROL UNIT AND INDUSTRIAL APPLICATION
PROCÉDÉ DE FONCTIONNEMENT D'UN SYSTÈME D'ENTRAÎNEMENT, PRODUIT DE PROGRAMME INFORMATIQUE, UNITÉ DE COMMANDE ET APPLICATION INDUSTRIELLE

(30) Priorität: 27.09.2022 EP 22197922
(43) Veröffentlichungstag der Anmeldung: 11.06.2025
(73) Patentinhaber: Siemens Aktiengesellschaft, 80333 München (DE)
(72) Erfinder: KLOTZEK, Andreas, 91052 Erlangen (DE)
(74) Vertreter: Siemens Patent Attorneys
(86) Internationale Anmeldenummer: PCT/EP2023/071674
(87) Internationale Veröffentlichungsnummer: WO 2024/068109

(56) Entgegenhaltungen:
- EP-A1- 1 302 753
- WO-A1-2021/214061
- DE-A1- 102013 006 137
- DE-B3- 102020 116 488
- DE-T2- 69 630 282
- US-B1- 9 102 352

## Beschreibung

Die Erfindung betrifft ein Verfahren zum Betreiben eines Antriebssystems und ein Computerprogrammprodukt, mit dem ein derartiges Verfahren umsetzbar ist. Weiter betrifft die Erfindung eine Steuereinheit, die zu einem Durchführen eines solchen Computerprogrammprodukts ausgebildet ist. Darüber hinaus betrifft die Erfindung eine Industrie-Applikation, die mit einer derartigen Steuereinheit ausgestattet ist.

Die Offenlegungsschrift US 2002/0177909 A1 zeigt ein Steuersystem für eine Multivariablen-Steuerung, die in Industrieprozessen, insbesondere in der Papierherstellung, einsetzbar ist. Mit dem Steuersystem wird ein Verfahren umgesetzt, bei dem ein Vorhersagemodell verwendet wird, das einen Prozesszustand vorhersagt und eine Modellschleifenverzögerung berücksichtigt.

Das Patent US 6,219,196 B1 offenbart eine Regelung für eine Computerfestplatte, die darauf ausgelegt ist, mechanische Resonanzen zu unterdrücken. Dazu wird eine Frequenzcharakteristik der Regelschleife ermittelt und durch zwei Kerbfilter gefiltert.

DE 10 2020 116488 B3 offenbart ein Verfahren zum Betreiben einer Brennkraftmaschine, insbesondere ein Verfahren zur Regelung eines Luft-Kraftstoff-Verhältnisses, unter Anwendung eines neuronalen Netzes.

DE 10 2013 006137 offenbart ein Verfahren zur Regelung einer Druckmittelzufuhr für mindestens einen hydraulischen Aktor.

Die Internationale Anmeldung WO 2021/214061 A1 zeigt ein Verfahren zur Kompensation von Fehlern einer numerisch gesteuerten Werkzeugmaschine. Darin werden Ist-Messwerte von einer einen Zustand der Werkzeugmaschine beschreibenden Eingangsgröße erfasst und Kompensationsparameter bereitgestellt. Dabei werden Kennfelder bereitgestellt, die jeweils ein Strukturverhalten der Werkzeugmaschine und/oder eine geometrische Anordnung von Maschinenteilen der Werkzeugmaschine in Abhängigkeit von der jeweiligen Eingangsgröße beschrieben.

Antriebssysteme werden in einer Vielzahl an Industrie-Applikationen eingesetzt, die eine exakte Ansteuerung erfordern. Insbesondere werden eine erhöhte Positionierungsgenauigkeit, eine gesteigerte Laufruhe und ein reduzierter Verschleiß angestrebt. Hierzu sind Störeinflüsse zu kompensieren, die im Betrieb auf das Antriebssystem einwirken. Der Erfindung liegt die Aufgabenstellung zugrunde, eine Möglichkeit bereitzustellen, ein Antriebssystem derart zu betreiben, dass Störeinflüsse wirksam unterdrückt werden.

Die Aufgabenstellung wird durch ein erfindungsgemäßes Verfahren zum Betreiben eines Antriebssystems gelöst, das über eine Steuereinheit verfügt. Die Steuereinheit weist zumindest einen ersten Regler auf, der beispielsweise als Proportionalregler, als Integralregler, als Differentialregler oder eine Kombination hieraus ausgebildet sein kann. Das Antriebssystem bildet eine dem ersten Regler zugeordnete Regelstrecke, auf die eingewirkt wird. Das Verfahren umfasst einen ersten Schritt, in dem der erste Regler in einem aktiven Betriebszustand betrieben wird. Der aktive Betriebszustand umfasst ein Betreiben des Antriebssystems. Dem ersten Regler wird im aktiven Betriebszustand im Wesentlichen durchgängig eine erste Regler-Eingangsgröße zugeführt. Ebenso wird währenddessen im Wesentlichen durchgängig durch den ersten Regler eine erste Regler-Ausgangsgröße ausgegeben. Die Regler-Ausgangsgröße wird an die Regelstrecke, also das Antriebssystem, ausgegeben, um dieses zu steuern.

Weiter umfasst das Verfahren einen zweiten Schritt, in dem ein Streckenmodell betrieben wird, durch das ein Verhalten der Regelstrecke nachgebildet wird. Das Streckenmodell kann dazu beispielsweise ein Rechenmodell oder einen sogenannten Digitaler Zwilling der Regelstrecke umfassen. Das Streckenmodell wird im zweiten Schritt unter Zuführen einer Störfunktion betrieben. Die Störfunktion stellt eine äußere Störung nach, die auf die Regelstrecke im aktiven Betrieb einwirkt. Die Störfunktion stellt im Wesentlichen den Unterschied zwischen dem realen Betrieb und einem idealisierten Betrieb der Regelstrecke dar. Die Störfunktion wird im Wesentlichen durchgängig dem Streckenmodell zugeführt.

Das Verfahren weist ferner einen dritten Schritt auf, in dem ein erstes Streckenmodell-Ausgangssignal ermittelt wird. Das Streckenmodell-Ausgangssignal wird mit der ersten Regler-Ausgangsgröße kombiniert, um so eine Regelstrecken-Eingangsgröße zu bilden. Die Regelstrecken-Eingangsgröße gehört somit zu den Eingangssignalen, mit denen die Regelstrecke, also das Antriebssystem, angesteuert wird. Unter einem Kombinieren des ersten Streckenmodell-Ausgangssignals mit der ersten Regler-Ausgangsgröße zur Regelstrecken-Eingangsgröße ist beispielsweise ein Addieren oder Multiplizieren dieser Signale zu verstehen.

Erfindungsgemäß ist das Streckenmodell dazu ausgebildet, eine Soll-Ist-Abweichung der Regelstrecke, also des Antriebssystems, zu minimieren. Das Streckenmodell umfasst hierzu eine Modellierung der Störfunktion, die im Zusammenwirken mit zumindest dem ersten Regler dazu führt, dass eine Eingriffswirkung zumindest des ersten Reglers auf die Regelstrecke minimiert wird. Die Soll-Ist-Abweichung kann beispielsweise eine Abweichung zwischen einer Ist-Position und einer Soll-Position des Antriebssystems sein. Weiter erfindungsgemäß ist das Streckenmodell dazu geeignet, unabhängig vom Zustand der Regelstrecke betrieben zu werden. Die Störfunktion ist als deterministische Beschreibung, nämlich als periodische Funktion, insbesondere als harmonische Schwingung, ausgebildet. Die Erfindung basiert unter anderem auf der überraschenden Erkenntnis, dass eine deterministisch beschriebene Störfunktion dazu geeignet ist, eine Streckenmodell-Ausgangsgröße, also zumindest ein erstes Streckenmodell-Ausgangssignal, bereitzustellen, mit der die Funktionsweise des ersten Reglers unterstützbar ist. Das Unterstützen ist auch als eine Entlastung des ersten Reglers auffassbar. Dadurch wird in einfacher Weise der Betrieb des Antriebssystems robust gegen Störungen gestaltet. Das Streckenmodell mit der zugeführten Störfunktion ist im Wesentlichen separat betreibbar, so dass ein Regelkreis, zu dem der erste Regler gehört, einfach gehalten werden kann. Das Streckenmodell und die Störfunktion sind unabhängig vom zumindest ersten Regler konfigurierbar, so dass eine einfache Anpassung auf unterschiedliche Regelstrecken, also Antriebssysteme, möglich ist. Die Störfunktion ist ferner in überraschend einfacher Form nachstellbar, wie mit reduziertem Rechenaufwand abbildbar ist. Dementsprechend weist das erfindungsgemäße Verfahren eine gesteigerte Adaptivität auf und unterstützt unter anderem einen präzisen Echtzeitbetrieb der Regelstrecke, also des Antriebssystems. Das erfindungsgemäße Verfahren steigert somit auch die Echtzeitfähigkeit der Steuereinheit.

Des Weiteren umfasst die Regelstrecke, also das Antriebssystem, einen Motor, insbesondere einen Elektromotor. Die Regelstrecken-Eingangsgröße, die aus der ersten Regler-Ausgangsgröße und dem ersten Streckenmodell-Ausgangssignal gebildet wird, ist als Motoreingangsgröße ausgebildet. Eine Motoreingangsgröße kann beispielsweise ein Spulenstrom und/oder eine Magnetfeldstärke oder eine Eingangsspannung sein. Insgesamt wird durch die Motoreingangsgröße unmittelbar auf den Betrieb des Motors im Antriebssystem eingewirkt. Das beanspruchte Verfahren ist dazu geeignet, durch das Streckenmodell-Ausgangssignal unmittelbar auf die Ansteuerung des Antriebssystems einzuwirken. Eine weitere Verarbeitung am Motor selbst ist entbehrlich.

Weiter erfindungsgemäß ist die periodische Störung als periodisch ortsfeste Störung ausgebildet. Periodische ortsfeste Störungen sind in einfacher Weise modellierbar, so dass das Streckenmodell, das eine derartige Störung in Form einer entsprechenden Störfunktion berücksichtigt, unabhängig von der Regelstrecke betreibbar ist.

In einer Ausführungsform des beanspruchten Verfahrens ist das Streckenmodell dazu ausgebildet, die erste Regler-Ausgangsgröße zu minimieren. Unter einem Minimieren ist hierbei ein Einstellen auf im Wesentlichen eine Neutraloperation des Reglers zu verstehen, beispielsweise eine Addition von Null oder eine Multiplikation mit Eins. Das Streckenmodell ist dazu ausgebildet, eine unmittelbar weitergeleitete Wirkung der Störfunktion auf die Regelstrecke zu quantifizieren und mit dem Streckenmodell-Ausgangssignal im Wesentlichen zu kompensieren. Durch das Streckenmodell-Ausgangssignal wird der erste Regler gegen Wirkungen der Störung, die durch die Störfunktion nachgebildet ist, abgeschirmt. Das Streckenmodell-Ausgangssignal dient folglich einer Entkopplung einer Störungskompensation vom Regelbetrieb des ersten Reglers, also einem idealisierten Betrieb dessen. Die konstruktive Auslegung zumindest des ersten Reglers wird so vereinfacht. Insbesondere kann der erste Regler auf einen idealisierten Betrieb, also störungsfreien Betrieb, ausgelegt sein. Dies erlaubt es wiederum, mit dem ersten Regler eine besonders präzise Regelung, insbesondere eine präzise Lageregelung und Geschwindigkeitsregelung des Antriebssystems zu erzielen. Hierdurch sind mittels des beanspruchten Verfahrens unter anderem Werkzeugmaschinenantriebe bereitstellbar, die eine gesteigerte Fertigungsgenauigkeit bieten.

Weiter kann im beanspruchten Verfahren dem Streckenmodell im zweiten Schritt ein Regelstrecken-Parameter zugeführt werden. Der Regelstrecken-Parameter kann eine an der Regelstrecke, also dem Antriebssystem, gemessene physikalische Größe sein. Der Regelstrecken-Parameter kann periodisch, aperiodisch oder im Wesentlichen durchgängig dem Streckenmodell als Eingang zugeführt werden. Mittels des zugeführten Regelstrecken-Parameters ist ein Versatz zwischen der Regelstrecke und dem Streckenmodell, also ein Auseinanderlaufen dieser, vermeidbar. Dies erlaubt es wiederum, das erste Streckenmodell-Ausgangssignal exakter einzustellen. Die Robustheit des Antriebssystems, also der Regelstrecke, gegen die mit der Störfunktion nachgestellte Störung wird folglich gesteigert.

In einer weiteren Ausführungsform des beanspruchten Verfahrens weist die Steuereinheit, zu der der erste Regler gehört, auch einen zweiten Regler auf. Der zweite Regler ist dazu ausgebildet, eine zweite Regler-Ausgangsgröße auszugeben. Weiter ist der zweite Regler dem ersten Regler vorgeschaltet. Dementsprechend dient die zweite Regler-Ausgangsgröße dazu, dem ersten Regler die erste Regler-Eingangsgröße bereitzustellen. Das beanspruchte Verfahren ist auch zur Verwendung in Regelsystemen, also Steuereinheiten, geeignet, in denen mehrere Regler zusammenwirken. Das beanspruchte Verfahren ist somit auch zur Verwendung in komplexen Antriebssystemen, und somit auch Industrie-Applikationen, geeignet.

Im beanspruchten Verfahren kann das Streckenmodell dazu ausgebildet sein, ein zweites Streckenmodell-Ausgangssignals auszugeben. Das zweite Streckenmodell-Ausgangssignal wird im dritten Schritt, korrespondierend zum ersten Streckenmodell-Ausgangssignal und der ersten Regler-Ausgangsgröße, mit der zweiten Regler-Ausgangsgröße kombiniert. Das Kombinieren kann analog als ein Addieren oder Multiplizieren der zweiten Regler-Ausgangsgröße und des zweiten Streckenmodell-Ausgangssignals ausgebildet sein. Das Streckenmodell kann ferner dazu ausgebildet sein, dass mittels der zweiten Streckenmodell-Ausgangsgröße, also einem zweiten Streckenmodell-Ausgangssignal, die zweite Regler-Ausgangsgröße, analog der ersten Regler-Ausgangsgröße, minimiert wird. Das Streckenmodell ist in einfacher Weise daran anpassbar, dass durch Bereitstellen des ersten und zweiten Streckenmodell-Ausgangssignals auch komplexe Steuereinheiten mit mehreren Reglern gegen Störungen kompensiert zu betreiben.

Ferner kann im beanspruchten Verfahren die erste Regler-Eingangsgröße auch anhand eines Regelstrecken-Parameters ermittelt werden. Zur Ermittlung der ersten Regler-Eingangsgröße werden somit die zweite Regler-Ausgangsgröße, das zweite Regler-Ausgangssignal und der Regelstrecken-Parameter kombiniert. Der Regelstrecken-Parameter kann eine physikalische Größe sein, die an der Regelstrecke, also dem Antriebssystem, unmittelbar gemessen wird oder aus dort unmittelbar gemessenen physikalischen Größen abgeleitet ist. Der Regelstrecken-Parameter kann beispielsweise eine Motorkraft sein. Das beanspruchte Verfahren ist demzufolge an einen bestehenden Regelkreis, der als Feedback-System aufgebaut ist, ohne Weiteres einsetzbar. Die Erfindung basiert unter anderem auf der überraschenden Erkenntnis, dass ein Kombinieren des bestehenden Regelkreises mit dem Streckenmodell und den Streckenmodell-Ausgangssignalen weiterhin einen stabilen Betrieb des Antriebssystems erlaubt. Insbesondere zeigt das Antriebssystem, bei dem das beanspruchte Verfahren durchgeführt wird, keine gesteigerte Neigung zum Aufschaukeln. Insgesamt wird so für den ersten und zweiten Regler trotz einer vorliegenden Störung ein Betrieb ermöglicht, der im Wesentlichen einem idealisierten Betrieb entspricht.

Darüber hinaus kann das Streckenmodell zum Ausgeben eines dritten Streckenmodell-Ausgangssignals ausgebildet sein. Das dritte Streckenmodell-Ausgangssignal kann mit einem der Regelstrecken-Parameter zu einer Regler-Eingangsgröße des ersten, des zweite oder eines weiteren Reglers kombiniert werden. Das Streckenmodell, das dem beanspruchten Verfahren zugrunde liegt, ist folglich ohne Weiteres auf noch komplexere Steuereinheiten, also solche mit einer erhöhten Anzahl an Reglern, erweiterbar. Somit ist das beanspruchte Verfahren auch auf komplexe Antriebssysteme anwendbar. Dadurch, dass die Streckenmodell-Ausgangssignale dazu ausgebildet sein können, dass die Regelstrecken-Eingangsgröße, die erste Regler-Eingangsgröße und/oder eine zweite Regler-Eingangsgröße minimiert wird, sind die zugehörigen Regler im Wesentlichen gemäß einem idealisierten Betrieb betreibbar. Die Auslegung der Steuereinheit wird hierdurch vereinfacht, was wiederum einen präzisen Betrieb des Antriebssystems erlaubt.

In einer Ausführungsform des beanspruchten Verfahrens kann das Streckenmodell zum Nachstellen der periodischen ortsfesten Störung an der Regelstrecke ausgebildet sein. Die periodische ortsfeste Störung kann beispielsweise durch ein Vibrationsverhaltung einer Verzahnung hervorgerufen sein. Dementsprechend ist das Streckenmodell dazu ausgebildet, eine entsprechende Störfunktion einzubeziehen und anhand dessen zumindest das erste Streckenmodell-Ausgangssignal zu ermitteln. Periodische ortsfeste Störungen sind in einfacher Weise modellierbar, so dass das Streckenmodell, das eine derartige Störung in Form einer entsprechenden Störfunktion berücksichtigt, unabhängig von der Regelstrecke betreibbar ist. Eine Drift zwischen der Regelstrecke und dem Streckenmodell, also ein Auseinanderlaufen dieser, ist bei periodischen ortsfesten Störungen minimiert. Gleichzeitig ist eine Vielzahl an verbreiteten Störungen als periodische ortsfeste Störung hinreichend präzise abbildbar. Das Streckenmodell ist im beanspruchten Verfahren somit vielseitig an eine Vielzahl von Störungen anpassbar.

Weiter können im beanspruchten Verfahren der erste, zweite und/oder dritter Regler als Lageregler oder als Drehzahlregler ausgebildet sein. Bei Lagereglern und Drehzahlreglern wird mit dem beanspruchten Verfahren eine erhöhte Robustheit gegen Störungen erzielt. Dadurch, dass das beanspruchte Verfahren mit erhöhter Geschwindigkeit durchführbar ist, ist mit dem beanspruchten Verfahren die Echtzeitfähigkeit für eine Vielzahl an Industrie-Applikationen steigerbar.

In einer weiteren Ausführungsform kann das erste, zweite und/oder weitere Streckenmodell-Ausgangssignal unabhängig von einer Parametrierung des ersten, zweiten und/oder weiteren Reglers ausgebildet sein. Dadurch wird eine Rückkopplung zwischen den Reglern und dem Streckenmodell vermieden, die zu einem Aufschaukeln führen können. Das Streckenmodell kann dazu beispielsweise als Zwei-Massen-Schwingsystem ausgebildet sein, in dem der Motor und eine vom Motor bewegte Last die schwingenden Massen bilden. Die bewegte Last kann beispielsweise ein Werkzeug in einer Werkzeugmaschine sein, in dem das Antriebssystem das Werkzeug an eine vorgesehene Position verfährt. Innerhalb des Zwei-Massen-Schwingsystems können die Massen über ein elastisches Element miteinander gekoppelt sein. Optional kann zusätzlich ein Dämpfungselement zwischen den beiden Massen angeordnet sein. Bei derartigen Zwei-Massen-Schwingsystemen kann zumindest eine der Massen durch die Störfunktion angeregt werden. Derartige Streckenmodelle erfordern keine Kenntnis von den Reglern, die ansonsten das Betriebsverhalten des Antriebssystems berücksichtigen. Das Streckenmodell kann frei von Eingangssignalen betrieben werden, die den Betriebszustand der Regelstrecke näher charakterisieren. Die Erfindung basiert unter anderem auf der Erkenntnis, dass die Wirkung der Störung vom restlichen Betriebszustand separat betrachtbar ist und ein kompensierenden Streckenmodell-Ausgangssignal separat ermittelbar ist. Alternativ oder ergänzend kann das Streckenmodell jeglichen anderen Aufbau aufweisen, der mittels Lagrange- oder Hamilton-Mechanik beschreibbar ist.

Im beanspruchten Verfahren kann der zumindest eine Regelstrecken-Parameter jeweils eine Positionsangabe, eine Geschwindigkeitsangabe oder eine Motorzustandsgröße sein. Die Positionsangabe kann insbesondere eine Winkelpositionsangabe für eine Antriebswelle im Motor sein, die anzufahren ist. Die Geschwindigkeitsangabe kann beispielsweise eine Winkelgeschwindigkeit, und damit auch eine Drehzahl, angeben, die mit dem Antriebssystem zu erreichen ist. Die Motorzustandsgröße kann ein Spulenstrom sein, durch den eine Wärmefreisetzung im Motor vorgegeben wird. Alternativ oder ergänzend kann eine vorliegende Temperatur im Motor als Motorzustandsgröße dienen.

Ferner kann das Streckenmodell im beanspruchten Verfahren Übertragungsfunktionen aus einem Mehrkörpersystem-Modell der Regelstrecke umfassen. Das Verhalten der Regelstrecke, also des Antriebssystems, wird als Übertragungsfunktion abgebildet und ist so wie eine Komponente des Regelkreises mit dem ersten, zweiten und/oder weiteren Regler verarbeitbar. Das beanspruchte Verfahren ist durch diese vereinfachte Berechenbarkeit schnell an unterschiedliche Anwendungsfälle, insbesondere andere Industrie-Applikationen anpassbar.

Die zugrundeliegende Aufgabenstellung wird ebenso durch ein erfindungsgemäßes Computerprogrammprodukt gelöst. Das Computerprogrammprodukt ist dazu ausgebildet, zumindest eine Regler-Eingangsgröße und mindestens eine Regler-Ausgangsgröße zu Empfangen und zu Verarbeiten. Das Empfangen und Verarbeiten dieser Größen dient zu einem Ermitteln zumindest einer Regelstrecken-Eingangsgröße anhand eines Streckenmodells, das ebenfalls zum Computerprogrammprodukt gehört. Erfindungsgemäß wird die Regelstrecken-Eingangsgröße anhand eines Verfahrens nach einem der oben skizzierten Verfahren ermittelt. Durch das beanspruchte Verfahren ist das erfindungsgemäße Computerprogrammprodukt mit reduziertem Rechenaufwand durchführbar und bietet eine erhöhte Geschwindigkeit. Hierdurch ist das Computerprogrammprodukt dazu ausgebildet, ein Antriebssystem im Wesentlichen in Echtzeit zu steuern. Der Begriff Echtzeit ist hierbei im Sinne der zugrundeliegenden Anwendung, insbesondere der zugrundeliegenden Industrie-Applikation, aufzufassen. Mittels des erfindungsgemäßen Computerprogrammprodukts ist das beanspruchte Verfahren in einfacher Weise auf einem bestehenden Antriebssystem, beispielsweise im Zuge einer Nachrüstung, anwendbar.

Weiter wird die oben beschriebene Aufgabe durch eine erfindungsgemäße Steuereinheit gelöst, die zu einem Steuern eines Antriebssystems ausgebildet ist. Des Weiteren ist die Steuereinheit zum Ausgeben eines Steuersignals an das Antriebssystem ausgebildet. Das Steuersignal ist als eine Regelstrecken-Eingangsgröße ausgebildet, durch die in den Betrieb des Antriebssystems eingegriffen werden kann. Erfindungsgemäß wird das Steuersignal, und damit die Regelstrecken-Eingangsgröße, mittels eines Computerprogrammprodukts ermittelt, das nach einer der oben dargestellten Ausführungsformen ausgebildet ist. Alternativ oder ergänzend ist die Steuereinheit dazu ausgebildet, zumindest eines der oben dargestellten Verfahren auszuführen.

Die skizzierte Aufgabenstellung wird ebenso durch eine erfindungsgemäße Industrie-Applikation gelöst, die ein Antriebssystem aufweist, die mechanisch mittelbar oder unmittelbar mit einer Abtriebseinheit gekoppelt ist. Das Antriebssystem umfasst zumindest einen Motor, der über eine Steuereinheit ansteuerbar ist. Erfindungsgemäß ist die Steuereinheit gemäß einer der oben dargestellten Ausführungsformen ausgebildet.

Die Erfindung wird im Folgenden anhand einer Ausführungsform in einer Figur näher erläutert. Die in der Figur gezeigte Ausführungsform ist mit den oben skizzierten Merkmalen kombinierbar. Es zeigen im Einzelnen:

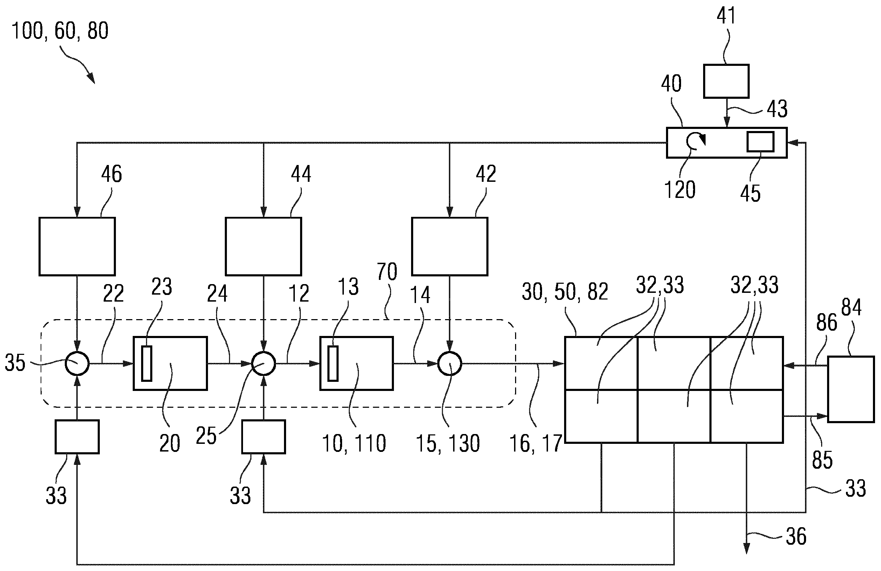

- FIG 1: schematisch eine erste Ausführungsform des beanspruchten Verfahrens.

Eine erste Ausführungsform des beanspruchten Verfahrens 100 ist in FIG 1 schematisch dargestellt. Das Verfahren 100 dient dazu, ein Antriebssystem 50 zu betreiben, das einen Elektromotor 82 umfasst, der von einer Steuereinheit 70 angesteuert wird. Die Steuereinheit 70 weist einen ersten und einen zweiten Regler 10, 20 auf, die hintereinandergeschaltet sind und jeweils durch einen ersten bzw. zweiten Regler-Parameter 13, 23 einstellbar sind. Das Antriebssystem 50 stellt eine Regelstrecke 30 dar, die durch eine Mehrzahl an Regelstrecken-Parametern 33 charakterisiert ist. Dementsprechend ist die Regelstrecke 30 in FIG 1 durch eine Mehrzahl an Zellen 32 dargestellt, die jeweils einen Regelstrecken-Parameter 33 abbildet. Im laufenden Betrieb der Regelstrecke 30 stellt sich eine Soll-Ist-Abweichung 36 zwischen einer Ist-Größe und einer Soll-Größe der Regelstrecke 30 ein, beispielsweise zwischen einer Ist-Position und einer Soll-Position des Antriebssystems 50. Die Steuereinheit 70, und damit die Regler 10, 20 wirken zusammen und bilden eine Regelstrecken-Eingangsgröße 16, mit der auf die Regelstrecke 30, also das Antriebssystem 50, eingewirkt wird. Die Regelstrecken-Eingangsgröße 16 stellt ein Steuersignal 71 dar, mit dem die Steuereinheit 70 auf das Antriebssystem 50, und damit auf die Regelstrecke 30, einwirkt. Durch das Steuersignal 71 wird eine Motoreingangsgröße für den Motor 82 beeinflusst. Das Antriebssystem 50 ist drehmomentübertragend mit einem Getriebe 84 verbunden, so dass Antriebsleistung 85 zum Getriebe 84 übertragen wird. Das Getriebe 84 und das Antriebssystem 50 gehören zu einer Industrie-Applikation 80, die durch das Antriebssystem 50 angetrieben wird. Das Getriebe 84 umfasst zumindest eine nicht näher gezeigte Verzahnung, durch die eine Störung 86 auf den Elektromotor 82, also das Antriebssystem 50 und damit die Regelstrecke 30, einwirkt. Die Störung 86 ist als periodische ortsfeste Störung ausgebildet. Das Verfahren 100 geht von einem ersten Schritt 110 aus, in dem das Antriebssystem 50 mit der Steuereinheit 70 im aktiven Betriebszustand bereitgestellt wird. Dabei wird dem ersten Regler 10 eine erste Regler-Eingangsgröße 12 zugeführt, die durch den ersten Regler 10 verarbeitet wird. Der erste Regler 10 gibt im ersten Schritt 110 im Wesentlichen durchgängig eine erste Regler-Ausgangsgröße 14 aus.

Das Verfahren 100 umfasst auch einen zweiten Schritt 120, in dem ein Streckenmodell 40 betrieben wird, durch das das Verhalten der Regelstrecke 30 nachgestellt wird. Das Streckenmodell 40 kann dazu als sogenannter Digitaler Zwilling ausgebildet sein. Dem Streckenmodell 40 wird während des Betriebs im Wesentlichen durchgängig eine Störfunktion 41 zugeführt, durch die Wirkung der Störung 86, die vom Getriebe 84 hervorgerufen wird, nachgestellt wird. Das Zuführen der Störfunktion 41 ist durch den Pfeil 43 versinnbildlicht. Das Streckenmodell 40 und die Störfunktion 41 sind unabhängig von der Regelstrecke 30 betreibbar. Das wechselseitige Verhalten zwischen der Störfunktion 86 und dem Streckenmodell 40 ist durch ein Zwei-Massen-Schwingsystem beschrieben. Durch das Streckenmodell 40 wird ein erstes Streckenmodell-Ausgangssignal 42 ermittelt, das zu einem Kombinieren 15 mit der ersten Regler-Ausgangsgröße 14 zugeführt wird. Das erste Streckenmodell-Ausgangssignal 42 wird vom Streckenmodell 40 derart ermittelt, dass die Soll-Ist-Abweichung 36 minimiert wird, indem die erste Regler-Ausgangsgröße 14 minimiert wird. Unter Minimieren ist hierbei zu verstehen, dass zwischen der ersten Regler-Eingangsgröße 12 und der ersten Regler-Ausgangsgröße 14 im Wesentlichen eine Neutral-Operation des ersten Reglers 10 vorliegt, beispielsweise eine Addition von Null oder eine Multiplikation mit Eins. Hierzu umfasst das Streckenmodell 40 zumindest eine Übertragungsfunktion 45, die unabhängig von Regler-Parametern 13, 23 ist und im Wesentlichen oder ausschließlich auf Angaben über die Regelstrecke 30 basiert. Mittels der mindestens einen Übertragungsfunktion 45 wird die Auswirkung der Störung 86 auf die Regelstrecke 30 dargestellt. Das Streckenmodell 40 ist dazu ausgebildet, zumindest ein Streckenmodell-Ausgangssignal 42, 44, 46 zu ermitteln, das im Wesentlichen einer Invertierung der Störfunktion 41 entspricht. Hieraus ergibt sich zumindest teilweise eine Kompensation der Störung 86 in der Regelstrecke 40, also dem Antriebssystem 50.

Weiter umfasst das Verfahren 100 einen dritten Schritt 130, in dem, die erste Regler-Ausgangsgröße 14 mit dem ersten Streckenmodell-Ausgangssignal 42 kombiniert wird. Das Kombinieren 15 im dritten Schritt 130 kann als ein Addieren oder Multiplizieren der ersten Regler-Ausgangsgröße 14 und des ersten Streckenmodell-Ausgangssignals 42 ausgebildet sein. Durch das Kombinieren 15 wird die Regelstrecken-Eingangsgröße 16 gebildet, durch die auf die Regelstrecke 30 unmittelbar eingewirkt wird.

Ferner wird im beanspruchten Verfahren 100 durch das Streckenmodell 40 ein zweites Streckenmodell-Ausgangssignal 44 ermittelt. Das zweite Streckenmodell-Ausgangssignal 44 wird mit einer zweiten Regler-Ausgangsgröße 24 und einem Regelstrecken-Parameter 33 kombiniert. Durch das Kombinieren 25, das als Addieren oder Multiplizieren ausgebildet sein kann, wird die erste Regler-Eingangsgröße 12 ermittelt. Der Regler-Parameter 33 wird durch entsprechende Erfassungsmittel in der Regelstrecke 30 mittelbar oder unmittelbar erfasst. Das zweite Streckenmodell-Ausgangssignal 44 ist dazu ausgebildet, dass die Soll-Ist-Abweichung 36 minimiert wird, indem auch die zweite Regler-Ausgangsgröße 24 minimiert wird. Analog zum Minimieren der ersten Regler-Ausgangsgröße 14 umfasst das Minimieren der zweiten Regler-Ausgangsgröße 24, dass der zweite Regler 20 im Wesentlich eine Neutral-Operation mit einer zugehörigen zweiten Regler-Ausgangsgröße 22 durchführt.

Ebenso wird durch das Streckenmodell 40 ein drittes Streckenmodell-Ausgangssignal 46 ausgegeben, das mit einem der Strecken-Parameter 33 kombiniert wird. Das Kombinieren 35 kann als Addieren oder Multiplizieren des Strecken-Parameters 33 mit dem dritten Streckenmodell-Ausgangssignal 46 ausgebildet sein. Durch das Kombinieren 35 wird die zweite Regler-Ausgangsgröße 22 gebildet.

Durch das Streckenmodell 40 wird über die Streckenmodell-Ausgangssignale 42, 44, 46 eine im Wesentlichen Invertierung der Störfunktion 41 bilden, mit erhöhter Geschwindigkeit ermittelt, wodurch Echtzeitfähigkeit gegeben ist. Der Begriff der Echtzeit ist dabei im Zusammenhang mit der Industrie-Applikation 80 aufzufassen, in der das Antriebssystem 50 eingesetzt wird. Dem Streckenmodell 40 wird während des Verfahren 100 zumindest teilweise ein wählbarer Regelstrecken-Parameter 33 zugeführt. Mittels des so rückgeführten Regelstrecken-Parameters 33 ist der im Streckenmodell 40 abgebildete Zustand der Regelstrecke 40 auf Plausibilität prüfbar und/oder das Streckenmodell 40 aktualisierbar. Das beanspruchte Verfahren 100 wird mittels eines nicht näher gezeigten Computerprogrammprodukts 60 durchgeführt, das auf der Steuereinheit 70 ausführbar ist.

## Patentansprüche

1. Verfahren (100) zum Betreiben eines Antriebssystems (50) mit einer Steuereinheit (70), die zumindest einen ersten Regler (10) aufweist, und das Antriebssystem (50) eine dem ersten Regler (10) zugehörige Regelstrecke (30) ist, umfassend die Schritte:
a) Betreiben des Antriebssystems (50) und des ersten Reglers (10) in einem aktiven Betriebszustand unter Zuführen zumindest einer ersten Regler-Eingangsgröße (12) und Ausgeben zumindest einer ersten Regler-Ausgangsgröße (14);
b) Betreiben eines Streckenmodells (40), das ein Verhalten der Regelstrecke (30) nachbildet;
c) Ermitteln eines ersten Streckenmodell-Ausgangssignals (42), das mit der ersten Regler-Ausgangsgröße (14) zu einer Regelstrecken-Eingangsgröße (16) kombiniert wird,
wobei das Streckenmodell (40) dazu ausgebildet ist, eine Soll-Ist-Abweichung (36) der Regelstrecke (30) zu minimieren und ein erstes Streckenmodell-Ausgangssignal (42) bereitzustellen, mit dem die Funktionsweise des ersten Reglers (10) unterstützt wird, wobei das Streckenmodell (40) dazu ausgebildet ist, die erste Regler-Ausgangsgröße (14) zu minimieren, und dazu ausgebildet ist, eine unmittelbar auf die Regelstrecke (30) weitergeleitete Wirkung der Störfunktion (41) auf die Regelstrecke (30) zu quantifizieren und mit dem ersten Streckenmodell-Ausgangssignal (42) zu kompensieren, wobei die Regelstrecke (30) einen Elektromotor (82) umfasst und die Regelstrecken-Eingangsgröße (16) als Motoreingangsgröße ausgebildet ist, **dadurch gekennzeichnet, dass** Schritt b) unter Zuführen einer deterministisch beschriebenen Störfunktion (41) durchgeführt wird, wobei die Störfunktion (41) als periodische ortsfeste Störung ausgebildet ist, so dass das Streckenmodell (40), das eine derartige Störung in Form einer entsprechenden Störfunktion berücksichtigt, unabhängig von der Regelstrecke (30) betreibbar ist.

2. Verfahren (100) nach Anspruch 1, **dadurch gekennzeichnet, dass** die deterministisch beschriebene Störfunktion (41) als eine harmonische Schwingung ausgebildet ist.

3. Verfahren (100) nach Anspruch 1 oder 2, **dadurch gekennzeichnet, dass** im Schritt b) dem Streckenmodell (40) ein Regelstrecken-Parameter (33) zugeführt wird.

4. Verfahren (100) nach einem der Ansprüche 1 bis 3, **dadurch gekennzeichnet, dass** die Steuereinheit (70) einen zweiten Regler (20) aufweist, der zu einem Ausgeben einer zweiten Regler-Ausgangsgröße (24) ausgebildet ist und dem ersten Regler (10) vorgeschaltet ist.

5. Verfahren (100) nach Anspruch 4, **dadurch gekennzeichnet, dass** das Streckenmodell (40) zum Ausgeben eines zweiten Streckenmodell-Ausgangssignals (44) ausgebildet ist, das mit der zweiten Regler-Ausgangsgröße (24) zur ersten Regler-Eingangsgröße (12) kombiniert wird.

6. Verfahren (100) nach Anspruch 5, **dadurch gekennzeichnet, dass** die erste Regler-Eingangsgröße (12) auch anhand eines Regelstrecken-Parameters (33) ermittelt wird.

7. Verfahren (100) nach einem der Ansprüche 1 bis 6, **dadurch gekennzeichnet, dass** das Streckenmodell (40) zum Ausgeben eines dritten Streckenmodell-Ausgangssignals (46) ausgebildet ist, das mit einem Regelstrecken-Parameter (33) zu einer Regler-Eingangsgröße (12, 22) des ersten Reglers (10), des zweiten Reglers (20) oder eines weiteren Reglers kombiniert wird.

8. Verfahren (100) nach einem der Ansprüche 1 bis 7, **dadurch gekennzeichnet, dass** das Streckenmodell (40) zum Nachstellen einer periodischen ortsfesten Störung (86), beispielsweise eines Vibrationsverhaltens einer Verzahnung, der Regelstrecke (30) ausgebildet ist.

9. Verfahren (100) nach einem der Ansprüche 1 bis 8, **dadurch gekennzeichnet, dass** der erste, zweite und/oder weitere Regler (10, 20) als Lageregler oder als Drehzahlregler ausgebildet ist.

10. Verfahren (100) nach einem der Ansprüche 1 bis 9, **dadurch gekennzeichnet, dass** die erste, zweite und/oder eine weitere Streckenmodell-Ausgangssignal (42, 44, 46) unabhängig von einer Parametrierung (13, 23) des ersten, zweiten und/oder weiteren Regler (10, 20) sind.

11. Verfahren (100) nach einem der Ansprüche 1 bis 10, **dadurch gekennzeichnet, dass** zumindest einer der Regelstrecken-Parameter (33) jeweils eine Positionsangabe, eine Geschwindigkeitsangabe oder eine Motorzustandsgröße ist.

12. Verfahren (100) nach einem der Ansprüche 1 bis 11, **dadurch gekennzeichnet, dass** das Streckenmodell (40) Übertragungsfunktionen (45) gemäß einem Mehrkörpersystem-Modell der Regelstrecke (30) umfasst.

13. Computerprogrammprodukt (60) zum Empfangen und Verarbeiten einer Regler-Eingangsgröße (12, 22), mindestens einer Regler-Ausgangsgröße (14, 24) und zum Ermitteln zumindest einer Regelstrecken-Eingangsgröße (16) anhand eines Streckenmodells (40) **dadurch gekennzeichnet, dass** die Regelstrecken-Eingangsgröße (16) anhand eines Verfahrens (100) nach einem der Ansprüche 1 bis 12 ermittelt wird.

14. Steuereinheit (70) zum Steuern zumindest eines Antriebssystems (50), die zum Ausgeben eines Steuersignals (71) an das Antriebssystem (50) ausgebildet ist, wobei das Steuersignal (71) als eine Regelstrecken-Eingangsgröße (16) ausgebildet ist, die durch ein Computerprogrammprodukt (60) nach Anspruch 13 und/oder durch ein Verfahren (100) nach einem der Ansprüche 1 bis 12 ermittelt wird.

15. Industrie-Applikation (80), umfassend ein Antriebssystem (50) mit einem Elektromotor (82), der mit einer Steuereinheit (70) gekoppelt ist, **dadurch gekennzeichnet, dass** die Steuereinheit (70) nach Anspruch 14 ausgebildet ist.

## Claims

1. Method (100) for operating a drive system (50) with a control unit (70), which has at least one first controller (10), and the drive system (50) is a controlled system (30) associated with the first controller (10), comprising the steps:
a) operating the drive system (50) and the first controller (10) in an active operating state with the supply of at least one first controller input variable (12) and output of at least one first controller output variable (14);
b) operating a system model (40), which emulates a behaviour of the controlled system (30);
c) ascertaining a first system model output signal (42), which is combined with the first controller output variable (14) to form a controlled system input variable (16),
wherein the system model (40) is embodied to minimise a target-actual deviation (36) of the controlled system (30) and to provide a first system model output signal (42), with which the functionality of the first controller (10) is supported, wherein the system model (40) is embodied to minimise the first controller output variable (14), and is embodied to quantify an effect of the interference function (41) on the controlled system (30), which is passed on to the controlled system (30), and to compensate this using the first system model output signal (42), wherein the controlled system (30) comprises an electric motor (82) and the controlled system input variable (16) is embodied as a motor input variable, **characterised in that** step b) is performed with the supply of a deterministically described interference function (41), wherein the interference function (41) is embodied as a periodically stationary interference, so that the system model (40), which takes into consideration an interference of this kind in the form of a corresponding interference function, can be operated independently of the controlled system (30).

2. Method (100) according to claim 1, **characterised in that** the deterministically described interference function (41) is embodied as a harmonic oscillation.

3. Method (100) according to claim 1 or 2, **characterised in that** a controlled system parameter (33) is supplied to the controlled system (40) in step b).

4. Method (100) according to one of claims 1 to 3, **characterised in that** the control unit (70) has a second controller (20), which is embodied to output a second controller output variable (24) and is connected upstream of the first controller (10).

5. Method (100) according to claim 4, **characterised in that** the controlled system (40) is embodied to output a second system model output signal (44), which is combined with the second controller output variable (24) to form the first controller input variable (12).

6. Method (100) according to claim 5, **characterised in that** the first controller input variable (12) is also ascertained on the basis of a controlled system parameter (33).

7. Method (100) according to one of claims 1 to 6, **characterised in that** the system model (40) is embodied to output a third system model output signal (46), which is combined with a controlled system parameter (33) to form a controller input variable (12, 22) of the first controller (10), the second controller (20) or a further controller.

8. Method (100) according to one of claims 1 to 7, **characterised in that** the system model (40) is embodied to simulate a periodically stationary interference (86), for example a vibration behaviour of a gearing, of the controlled system (30).

9. Method (100) according to one of claims 1 to 8, **characterised in that** the first, second and/or further controller (10, 20) is embodied as a position controller or as a speed controller.

10. Method (100) according to one of claims 1 to 9, **characterised in that** the first, second and/or a further system model output signal (42, 44, 46) are independent of a parameterisation (13, 23) of the first, second and/or further controller (10, 20).

11. Method (100) according to one of claims 1 to 10, **characterised in that** at least one of the controlled system parameters (33) in each case is a position indication, a speed indication or a motor state variable.

12. Method (100) according to one of claims 1 to 11, **characterised in that** the system model (40) comprises transfer functions (45) according to a multi-body system model of the controlled system (30).

13. Computer program product (60) for receiving and processing a controller input variable (12, 22), at least one controller output variable (14, 24) and for ascertaining at least one controlled system input variable (16) on the basis of a system model (40), **characterised in that** the controlled system input variable (16) is ascertained on the basis of a method (100) according to one of claims 1 to 12.

14. Control unit (70) for controlling at least one drive system (50), which is embodied to output a control signal (71) to the drive system (50), wherein the control signal (71) is embodied as a controlled system input variable (16), which is ascertained by a computer program product (60) according to claim 13 and/or by a method (100) according to one of claims 1 to 12.

15. Industry application (80), comprising a drive system (50) with an electric motor (82), which is coupled to a control unit (70), **characterised in that** the control unit (70) is embodied according to claim 14.

## Revendications

1. Procédé (100) pour faire fonctionner un système (50) d'entraînement comprenant une unité (70) de commande, qui a au moins un premier régleur (10), et le système (50) d'entraînement est un système (30) asservi appartenant au premier régleur (10), comprenant les stades :
a) on fait fonctionner le système (50) d'entraînement et le premier régleur (10) dans un état de fonctionnement actif avec entrée d'au moins une première grandeur (12) d'entrée de régleur et sortie d'au moins une première grandeur (14) de sortie de régleur ;
b) on fait fonctionner un modèle (40) de système asservi, qui représente un comportement du système asservi (30) ;
c) on détermine un premier signal (42) de sortie du modèle asservi, que l'on combine à la première grandeur (14) de sortie de régleur en une grandeur (16) d'entrée de système asservi,
dans lequel le modèle (40) de système asservi est constitué pour minimiser un écart (36) consigne-réel du système asservi (30) et pour donner un premier signal (42) de sortie de modèle asservi, par lequel il est venu à l'appui du mode de fonctionnement du premier régleur (10), dans lequel le modèle (40) de système asservi est constitué pour minimiser la première grandeur (14) de sortie de régleur et est constitué pour quantifier un effet, acheminé directement sur le système asservi (30), de la fonction (41) de perturbation sur le système asservi (30) et pour le compenser par le premier signal (42) de sortie de modèle asservi, dans lequel le système asservi (30) comprend un moteur (82) électrique et la grandeur (16) d'entrée du système asservi est constituée sous la forme d'une grandeur d'entrée du moteur, **caractérisé en ce que** l'on effectue le stade b) avec apport d'une fonction (41) de perturbation décrite de manière déterministe, dans lequel la fonction (41) de perturbation est constituée sous la forme d'une perturbation périodique fixe en position, de manière à ce que le modèle (40) de système asservi, qui prend en compte une perturbation de ce genre sous la forme d'une fonction de perturbation correspondante, puisse fonctionner indépendamment du système asservi (30).

2. Procédé (100) suivant la revendication 1, **caractérisé en ce que** la fonction (41) de perturbation décrite de manière déterministe est constituée sous la forme d'une oscillation harmonique.

3. Procédé (100) suivant la revendication 1 ou 2, **caractérisé en ce que**, dans le stade b), on apporte au modèle (40) de système asservi un paramètre (33) de système asservi.

4. Procédé (100) suivant l'une des revendications 1 à 3, **caractérisé en ce que** l'unité (70) de commande a un deuxième régleur (20), qui est constitué pour donner une deuxième grandeur (24) de sortie de régleur et qui est monté en amont du premier régleur (10).

5. Procédé (100) suivant la revendication 4, **caractérisé en ce que** le modèle (40) de système asservi est constitué pour donner un deuxième signal (44) de sortie de modèle de système asservi, qui est combiné avec la deuxième grandeur (24) de sortie de régleur en la première grandeur (12) d'entrée de régleur.

6. Procédé (100) suivant la revendication 5, **caractérisé en ce que** l'on détermine la première grandeur (12) d'entrée de régleur également à l'aide d'un paramètre (33) de système asservi.

7. Procédé (100) suivant l'une des revendications 1 à 6, **caractérisé en ce que** le modèle (40) de système asservi est constitué pour donner un troisième signal (46) de sortie de modèle de système asservi, que l'on combine avec un paramètre (33) de système asservi en une grandeur (12, 22) d'entrée de régleur du premier régleur (10), du deuxième régleur (20) ou d'un autre régleur.

8. Procédé (100) suivant l'une des revendications 1 à 7, **caractérisé en ce que** le modèle (40) de système asservi est constitué pour l'ajustement d'une perturbation (86) périodique fixe en position, par exemple d'un comportement de vibration d'une denture, du système asservi (30).

9. Procédé (100) suivant l'une des revendications 1 à 8, **caractérisé en ce que** le premier, deuxième et/ou autre régleur (10, 20) est constitué sous la forme d'un régleur de position ou d'un régleur de vitesse de rotation.

10. Procédé (100) suivant l'une des revendications 1 à 9, **caractérisé en ce que** le premier, deuxième et/ou un autre signal (42, 44, 46) de sortie de modèle de système asservi sont indépendants d'un paramétrage (13, 23) du premier, deuxième et/ou autre régleur (10, 20).

11. Procédé (100) suivant l'une des revendications 1 à 10, **caractérisé en ce que**, au moins l'un des paramètres (33) de système asservi est respectivement une indication de position, une indication de vitesse ou une grandeur d'état du moteur.

12. Procédé (100) suivant l'une des revendications 1 à 11, **caractérisé en ce que** le modèle (40) de système asservi comprend des fonctions (45) de transfert suivant un modèle de système à plusieurs corps du système asservi (30).

13. Produit (60) de programme d'ordinateur pour la réception et le traitement d'une grandeur (12, 22) d'entrée de régleur d'au moins une grandeur (14, 24) de sortie de régleur et pour la détermination d'au moins une grandeur (16) d'entrée de système asservi, à l'aide d'un modèle (40) de système asservi, **caractérisé en ce que** la grandeur (16) d'entrée de système asservi est déterminée à l'aide d'un procédé (100) suivant l'une des revendications 1 à 12.

14. Unité (70) de commande pour la commande d'au moins un système (50) d'entraînement, qui est constituée pour donner un signal (71) de commande au système (50) d'entraînement, lequel le signal (71) de commande est constitué sous la forme d'une grandeur (16) d'entrée de système asservi, qui est déterminée par un produit (60) de programme d'ordinateur suivant la revendication 13 et/ou par un procédé (100) suivant l'une des revendications 1 à 12.

15. Application (80) dans l'industrie, comprenant un système (50) d'entraînement, ayant un moteur (82) électrique, qui est raccordé à une unité (70) de commande, **caractérisée en ce que** l'unité (70) de commande est constituée suivant la revendication 14.
